Europäisches Patentamt

European Patent Office

Office européen des brevets

(11) Veröffentlichungsnummer: **0 134 901**
A2

# (12) EUROPÄISCHE PATENTANMELDUNG

(21) Anmeldenummer: **84105861.3**

(22) Anmeldetag: **23.05.84**

(51) Int. Cl.⁴: **B 29 C 53/32**

(30) Priorität: **26.07.83 DE 3326858**

(43) Veröffentlichungstag der Anmeldung:
**27.03.85 Patentblatt 85/13**

(84) Benannte Vertragsstaaten:
**AT BE CH FR GB IT LI NL SE**

(71) Anmelder: **Leo, Reinhard Werner**
**Giessener Strasse 38**
**D-6057 Dietzenbach(DE)**

(72) Erfinder: **Leo, Reinhard Werner**
**Giessener Strasse 38**
**D-6057 Dietzenbach(DE)**

(74) Vertreter: **Schaafhausen, Ludwig Richard,**
**Dipl.-Phys. et al,**
**KEIL & SCHAAFHAUSEN Patentanwälte**
**Ammelburgstrasse 34**
**D-6000 Frankfurt am Main 1(DE)**

(54) Vorrichtung zum Herstellen einer gewickelten Wendel.

(57) Es wird eine Vorrichtung zum Herstellen einer gewickelten Wendel aus elastischem Werkstoff, z.B. Kunststoff wie
Polyester oder Polyamid, in einem endlosen Verarbeitungsprozeß mit einer Zuführeinrichtung für thermoplastische
Monofile, einem Wickelkopf mit einem Wickelkegel, über den
die Monofile einem Wickeldorn zugeführt werden, der so
lang ist, daß er mindestens durch einen Stabilisierungskanal
reicht, mit einer Vorschubeinrichtung für die gewickelte
Wendel und mit Mitteln zum Erhitzen der Wendel in dem
Stabiliesierungskanal beschrieben, mit der auch zum Beispiel Polyamide, die bei Erwärmung sehr weiche und labile
Eigenschaften aufweisen, sicher und mit großer Durchlaufgeschwindigkeit zu gewickelten Wendeln verarbeitet werden
können. Dies wird dadurch erreicht, daß der Stabilisierungskanal (8) durch zwei gegenüberliegende, flächenförmige
Transportvorrichtungen (6, 19; 7, 20) gebildet ist, zwischen
denen die gewickelte Wendel (5) endlos durchläuft, und daß
die aus einem wärmeübertragenden Material hergestellten
flächenförmigen Transportvorrichtungen (6, 19; 7, 20)
sowohl mit einem Heizkörper (9, 10) als auch mit der
durchlaufenden Wendel (5) in Kontakt sind.

./...

FIG.1

KEIL & SCHAAFHAUSEN
PATENTANWÄLTE

0134901

L 63 PG 2                                      Frankfurt am Main


                                               18.5.1984
                                               S/Su


Reinhard Werner Leo
Gießener Straße 38
6057 Dietzenbach


Vorrichtung zum Herstellen einer gewickelten Wendel


Beschreibung:


Die Erfindung betrifft eine Vorrichtung zum Herstellen einer gewickelten Wendel aus elastischem Werkstoff, gemäß dem Oberbegriff
des Anspruchs 1.

Eine derartige, gattungsgemäße Vorrichtung ist bereits aus der
DE-AS 11 52 529 bekannt. Bei dieser erhält die zugeführte, gewickelte Wendel durch zwei in dem Stabilisierungskanal vorgesehene Förderschnecken eine Teilung, die für bestimmte Anwendungen unerwünscht ist. Die Leistung einer derartigen Vorrichtung
ist durch den Schneckentransport begrenzt, da die Kontaktfläche
der Wendel zur Förderschnecke wegen der zusätzlichen Reibungswärme aufschmilzt.

In anderen Vorrichtungen wird die gewickelte Wendel zur Stabilisierung durch einen feststehenden Kanal geführt, in dem sie z.B.
durch Infrarotbestrahlung erhitzt wird.

Polyester, das zur Stabilisierung nur wenig erwärmt zu werden braucht, kann auf diese Weise relativ leicht bearbeitet werden. Bei Polyamiden allerdings, die zur Stabilisierung auf etwa 150 bis 260° C erhitzt werden müssen, führt dies zu erheblichen Schwierigkeiten, die nachfolgend näher ausgeführt sind:

Um ein endlos durchlaufendes Monofil aus einem Polyamid durch Strahlungshitze auf eine Temperatur von 150 bis 260° C zu bringen, ist eine relativ lange Einwirkungszeit nötig. Dieses ließe sich zwar durch einen entsprechend langen Stabilisierungskanal bewerkstelligen, wenn die Polyamide bei höheren Temperaturen nicht dazu neigen würden, labil zu werden. Das führt nämlich dazu, daß eine Windung der gewickelten Wendel die davorliegende nicht mehr auf dem Wickeldorn weiterschieben und die Wendel als Ganzes damit auch nicht mehr durch den Stabilisierungskanal vorwärtsbewegt werden kann. Werden in einem langen Stabilisierungskanal aber zusätzliche mechanische Hilfsmittel eingebaut, um die gewickelte Wendel auf dem Wickeldorn vorwärts zu transportieren, so verursachen diese Hilfsmittel bei einer weichen Wendel Deformierungen der Wendel. Polyamide lassen sich daher in der oben beschriebenen Weise, wenn überhaupt, so nur äußerst schwer zu gewickelten Wendeln verarbeiten, wie sie für Gliederbänder benötigt werden.

Aufgabe der Erfindung ist es daher, eine Vorrichtung der eingangs genannten Art zu schaffen, mit der auch z.B. Polyamide, die bei Erwärmung sehr weiche und labile Eigenschaften aufweisen, sicher und mit großer Durchlaufgeschwindigkeit zu gewickelten Wendeln verarbeitet werden können.

Diese Aufgabe wird erfindungsgemäß durch die kennzeichnenden Merkmale des Anspruchs 1 gelöst.Durch die Temperaturübertragung durch Kontakthitze und den gleichzeitigen Transport der Wendel
durch den Stabilisierungskanal mittels der die Wärme übertragenden Transportvorrichtung wird eine schnelle Erwärmung der gewickelten Wendel erreicht, so daß die Einwirkungszeit und damit
auch die Baulänge des Stabilisierungskanals kurz gehalten werden
kann. Auch sind keine zusätzlichen Hilfsmittel zur Fortbewegung
der Wendel in dem Stabilisierungskanal mehr notwendig. Die mit
einer derartigen Vorrichtung hergestellten Wendel zeichnen sich
durch eine besondere Genauigkeit aus und ermöglichen eine reibungslose Weiterverarbeitung zu Gliederbändern, wie sie für
Transportbänder, Siebe usw. verwendet werden.

Gemäß einer bevorzugten Ausführungsform der Erfindung ist die
flächenförmige Transportvorrichtung um zwei an den Enden des
Stabilisierungskanals angeordnete Rollen endlos geführt. Damit
läßt sich auch eine endlose Verarbeitung von Monofilen durchführen.

Vorteilhafterweise ist dabei eine der Rollen angetrieben und die
andere Rolle ist eine lose gelagerte Umlenkrolle. Um mit möglichst wenig Umlenkrollen auszukommen, ist die lose gelagerte
Umlenkrolle in ihrem Abstand zur Antriebsrolle verstellbar.

Gemäß einer besonders bevorzugten Ausführungsform weist die
flächenförmige Transportvorrichtung ein Federstahlband auf, das
zweckmäßigerweise eine Dicke von 0,05 bis 0,5 mm hat. Ein derart
dünnes Federstahlband ist ausreichend elastisch, um einen engen
Kontakt mit der gewickelten Wendel herzustellen und außerdem
spricht es relativ schnell auf eine Temperaturänderung der Heizkörper an. Anstelle des Federstahlbandes kann aber auch ein
metallisches Gliederband oder eine Kette mit aufgesetzten Segmenten verwendet werden.

Weitere vorteilhafte Ausgestaltungen der Erfindung sind Gegenstand von Unteransprüchen.

Die Erfindung wird nachfolgend anhand eines Ausführungsbeispieles näher erläutert, das in der Zeichnung dargestellt ist.

Es zeigt:

Fig. 1    eine Draufsicht auf eine erfindungsgemäße Vorrichtung zur Herstellung einer gewickelten Wendel und

Fig. 2    einen Schnitt entlang der Linie I-I in Fig. 1.

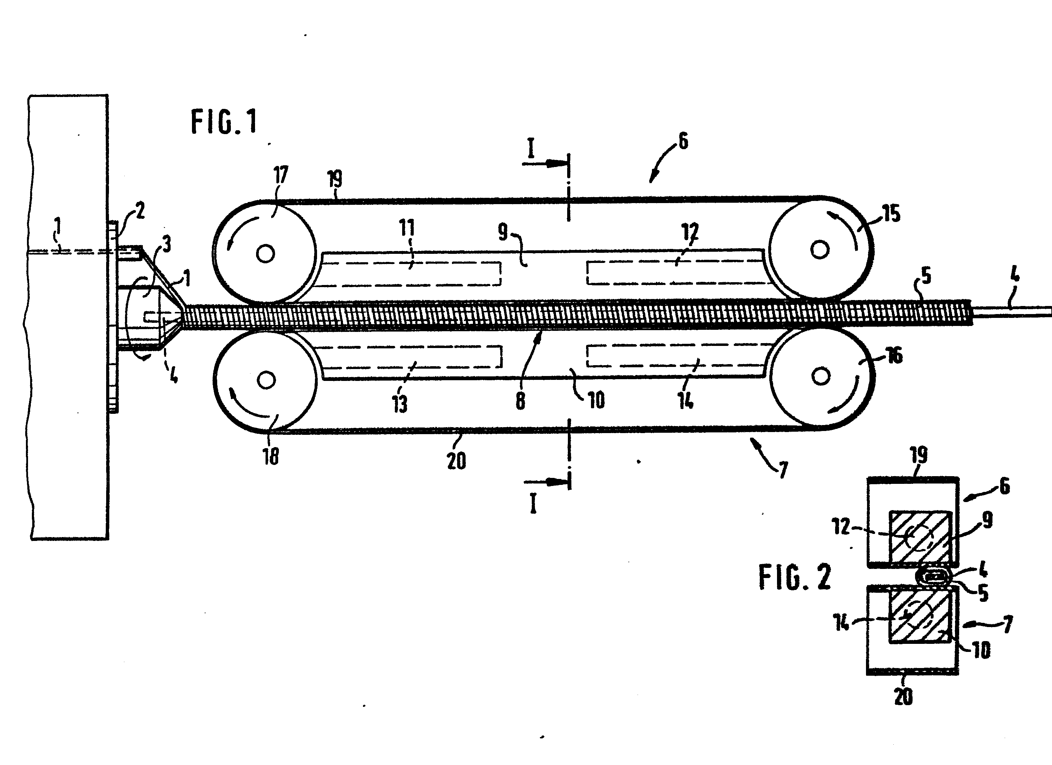

Über eine (nicht dargestellte) Zuführeinrichtung wird ein thermoplastisches Monofil 1, wie in Fig. 1 zu ersehen, einem Wickelkopf 2 zugeführt, in dessen Wickelkegel 3 ein Wickeldorn 4 angeordnet ist.

Durch Drehen des Wickelkopfes 2 wird das Monofil 1 derart auf den Wickeldorn 4 gewickelt, daß die gerade gewickelte Windung an die letzte Wicklung der bereits auf den Wickeldorn 4 befindlichen Wendel 5 anstößt und diese damit auf dem Wickeldorn 4 nach vorne schiebt. Danach wird die Wendel 5 von zwei Transportvorrichtungen 6 und 7 erfaßt, die zwischen sich einen Stabilisierungskanal 8 bilden. Die Transportvorrichtungen 6 und 7 sind spiegelsymmetrisch aufgebaut. Sie weisen jeweils einen Heizkörper 9, 10 auf, in denen Heizpatronen 11, 12 und 13, 14 angeordnet sind.

An den Enden der Heizkörper 9 und 10 sind jeweils eine Antriebsrolle 15, 16 und eine lose gelagerte Umlenkrolle 17, 18 vorgesehen. Um jedes Rollenpaar 15, 17 und 16, 18 ist ein dünnes Federstahlband 19, 20 gelegt, das auch gleichzeitig den auf der jeweiligen Seite des Stabilisierungskanals 8 angeordneten Heizkörper 9 und 10 einschließt.

Auf der dem Stabilisierungskanal 8 zugewandten Seite haben die endlos umlaufenden Federstahlbänder 19 und 20 direkten Kontakt mit den jeweiligen Heizkörpern 9 und 10. Der Abstand der Heizkörper 9 und 10 ist so bemessen, daß diese gleichzeitig als Führungsschienen für die durch den Stabilisierungskanal 8 durchlaufende Wendel 5 dienen.

Dadurch, daß die Federstahlbänder 19 und 20 nur eine Dicke von 0,05 bis 0,5 mm aufweisen, wird durch die Federstahlbänder die von den Heizkörpern 9 und 10 erzeugte Wärme mit einem guten Wirkungsgrad auf die gewickelte Wendel übertragen. Da gleichzeitig wegen der gleichförmigen Geschwindigkeit zwischen den Federstahlbändern 19 und 20 und der auf den Wickeldorn 4 zugeführten Wendel 5 während der Bewegung der Wendel 5 durch den Stabilisierungskanal ein direkter Kontakt zwischen der Wendel 5 und den Federstahlbändern 19 und 20 besteht, erfolgt eine äußerst günstige Wärmeübertragung durch Kontakthitze.

Dadurch, daß während der gesamten Bewegung durch den Stabilisierungskanal 8 keine zusätzlichen Kräfte auf die von den Federstahlbändern 19 und 20 auf dem Wickeldorn 4 vorwärts bewegte Wendel 5 auftreten, wobei der Stabilisierungskanal 8 wegen der direkten Übertragung der von den Heizkörpern 9 und 10 gelieferten Wärme auf die Wendel 5 relativ kurz gebaut sein kann, ist ein sicherer Transport der gewickelten Wendel während des Stabilisierungsprozesses gewährleistet.

Nach Austritt aus dem Stabilisierungskanal wird die gewickelte Wendel 5 in bekannter Weise wieder abgekühlt.

Durch die "bewegliche" Ausbildung des Stabilisierungskanals 8, der selbst den Transport der gewickelten Wendel 5 besorgt, kann die Durchlaufgeschwindigkeit der gewickelten Wendel groß sein, ohne daß es zu Bechädigungen der Wendel kommt.

L 63 PG 2

Frankfurt am Main

18.5.1984
S/Su

Reinhard Werner Leo
Gießener Straße 38
6057 Dietzenbach

Vorrichtung zum Herstellen einer gewickelten Wendel

Patentansprüche:

1.    Vorrichtung zum Herstellen einer gewickelten Wendel aus elastischem Werkstoff, z.B. Kunststoff wie Polyester oder Polyamid, in einem endlosen Verarbeitungsprozeß mit einer Zuführeinrichtung für thermoplastische Monofile, einem Wickelkopf mit einem Wickelkegel, über den die Monofile einem Wickeldorn zugeführt werden, der so lang ist, daß er mindestens durch einen Stabilisierungskanal reicht, mit einer Vorschubeinrichtung für die gewickelte Wendel und mit Mitteln zum Erhitzen der Wendel in dem Stabilisierungskanal, dadurch gekennzeichnet, daß der Stabilisierungskanal (8) durch zwei gegenüberliegende, flächenförmige Transportvorrichtungen (6, 19; 7, 20) gebildet ist, zwischen denen die gewickelte Wendel (5) endlos durchläuft, und daß die aus einem wärmeübertragenden Material hergestellten flächenförmigen Transportvorrichtungen (6, 19; 7, 20) sowohl mit einem Heizkörper (9, 10) als auch mit der durchlaufenden Wendel (5) in Kontakt sind.

2. Vorrichtung nach Anspruch 1, dadurch gekennzeichnet, daß der Abstand zwischen den beiden flächenförmigen Transportvorrichtungen (6; 7) so bemessen ist, daß die auf dem Wickeldorn (4) zugeführte gewickelte Wendel (5) von den beiden Transportvorrichtungen (6; 7) durch den Stabilisierungskanal (8) mitgenommen wird.

3. Vorrichtung nach Anspruch 1 oder 2, dadurch gekennzeichnet, daß die flächenförmigen Transportvorrichtungen (6, 19; 7, 20) jeweils um zwei an den Enden des Stabilisierungskanals (8) angeordnete Rollen (15, 17; 16, 18) endlos geführt sind.

4. Vorrichtung nach Anspruch 3, dadurch gekennzeichnet, daß eine der Rollen (15; 16) angetrieben ist und die andere Rolle (17; 18) eine lose gelagerte Umlenkrolle ist.

5. Vorrichtung nach Anspruch 4, dadurch gekennzeichnet, daß die lose gelagerte Umlenkrolle (17; 18) in ihrem Abstand zur Antriebsrolle (15; 16) verstellbar ist.

6. Vorrichtung nach einem der Ansprüche 1 bis 3, dadurch gekennzeichnet, daß die Transportvorrichtung (6; 7) ein Federstahlband (19; 20) aufweist.

7. Vorrichtung nach Anspruch 6, dadurch gekennzeichnet, daß das Federstahlband (19; 20) eine Dicke von 0,05 bis 0,5 mm hat.

8. Vorrichtung nach einem der Ansprüche 1 bis 3, dadurch gekennzeichnet, daß die Transportvorrichtung (6; 7) ein metallisches Gliederband aufweist.

9. Vorrichtung nach einem der Ansprüche 1 bis 3, dadurch gekennzeichnet, daß die Transportvorrichtung (6; 7) eine Kette mit aufgesetzten Segmenten aufweist.

10. Vorrichtung nach Anspruch 1, dadurch gekennzeichnet, daß die Heizkörper (9; 10) Heizpatronen (11, 12; 13, 14) aufweisen, deren Strahlrichtung auf die dem Stabilisierungskanal (8) zugewandte Wandung des Heizkörpers ausgerichtet ist.

0134901

FIG.1

FIG.2

L 63 PG 2